## Europäisches Patentamt

## European Patent Office

## Office européen des brevets

(11) Veröffentlichungsnummer: **0 021 137**
**A2**

(12) **EUROPÄISCHE PATENTANMELDUNG**

(21) Anmeldenummer: **80103073.5**

(22) Anmeldetag: **03.06.80**

(51) Int. Cl.³: **F 28 F 3/12**

(30) Priorität: **15.06.79 DE 2924305**

(43) Veröffentlichungstag der Anmeldung: **07.01.81**
**Patentblatt 81/1**

(84) Benannte Vertragsstaaten: **FR SE**

(71) Anmelder: **Mischke, Arnold, Lindenweg 7,**
**D-3257 Springe 4 (Völksen) (DE)**

(72) Erfinder: **Mischke, Arnold, Lindenweg 7,**
**D-3257 Springe 4 (Völksen) (DE)**

(74) Vertreter: **Johannesson, Benno, Dr.-Ing., Münder**
**Heerstrasse 4, D-3015 Wennigsen 1 (DE)**

(54) **Hohlplattenförmiges Wärmeaustauschelement.**

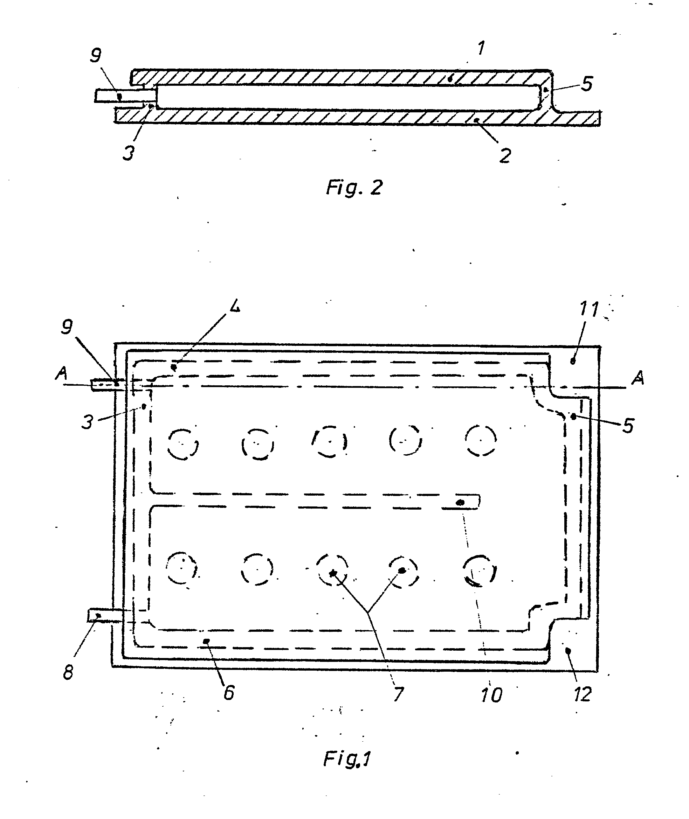

(57) Die Erfindung bezieht sich auf ein hohlplattenförmiges Wärmeaustauschelement rechteckförmiger Begrenzung. Derartige Elemente lassen sich zur Boden- oder Wandbedeckung zusammenlegen und können als Primär- oder Sekundär-Wärmeaustauschelemente verwendet werden. Fig. 1 zeigt eine Draufsicht und Fig. 2 einen Schnitt durch die Ebene A–A. Die Hohlplatte besteht z. B. aus Beton. In die Seitenwand 3 sind – jeweils nahe der Hohlplattenecke – der Zuführ- und der Abführstutzen 8 bzw. 9 eingesetzt. Die Seitenwandung 3 gegenüberliegende Seitenwandung 5 weist an ihren beiden Ecken Aussparungen 11 und 12 auf, deren jede beim reihenweisen Zusammenlegen der Hohlplatten zusammen mit der daneben liegenden Aussparung der Nachbarhohlplatte Platz zur Aufnahme benachbarter Stutzen einschließlich einer U-förmigen Verbindung zwischen ihnen bietet. Die Aussparungen 11 und 12 sind von der Deckenwandung 2 überdeckt.

Zur Auslegung einer Fläche mit diesem Bauelement wird zunächst eine Reihe derart gebildet, daß die Seitenwandungen 3 freibleiben. Benachbarte Stutzen nebeneinanderliegender Platten können dann bequem U-förmig miteinander verbunden werden. Beim Einlegen der nächsten Reihe überdecken deren Deckenwandungen 2 die Aussparungen 11, 12 der vorher eingelegten Reihe.

Arnold Mischke
Lindenweg 7

3257 Springe 4 (Völksen)

Wennigsen, den 5.6.1979

## Hohlplattenförmiges Wärmeaustauschelement

Auf dem Gebiet der Wärmetechnik werden primär wirkende
Wärmeaustauschelemente, insbesondere zur Speicherung der
Sonnenenergie, und sekundär wirkende Bauelemente, insbesondere zur Heizung von Räumen oder von Wasser benötigt.
Zweckmäßig sind deratgige Bauelemente als rechteckig begrenzte hohle Platten ausgebildet, die sich gut zu beliebig
großen Flächen zusammensetzen lassen. Bei einem bekannten
derartigen als Heizkörper dienenden Bauelement (DE-PS
829 657) wird der Hohlraum durch einen Mantel aus dünnem
Blech gebildet, der zur Erreichung genügender Festigkeit
mit einer starken Betonhaut versehen ist. Statt der Betonhaut können in den Blechmantel Blechverstärkungseinsätze
eingebracht werden. Zur Zu- und Abführung des Heizwassers
weist das bekannte Bauelement vier Stutzen auf, die in
Eckbezirke der Seitenwandungen des Blechmantels eingesetzt
sind, derart, daß die miteinander zu verbindenden Stutzen
eingebauter nebeneinander liegender Bauelemente miteinander
fluchten. Um ein unmittelbares Aneinanderliegen eingebauter
benachbarter Bauelemente zu ermöglichen, sind die Ecken

- 2 -

des bekannten Bauelementes ausgespart, um so den Stutzen und
deren Verbindungsmuffen Platz zu bieten. Diese Aussparungen
können nach dem Einbau durch Deckel abgedeckt werden.

Der Erfindung liegt die Aufgabe zugrunde, ein solches Bauelement zum massenweisen Einsatz als Primär- oder Sekundärwärmeaustauschelement bei einfacher Herstellbarkeit und
guter Wärmeaustauschleistung brauchbar zu machen. Hierzu
weist das erfindungsgemäße Bauelement die Merkmale des
Patentanspruchs 1 auf. Dadurch, daß der Körper der Hohlplatte aus Beton, aus kunstharzgebundenem Sand oder einem
ähnlichen Werkstoff besteht, ist er leicht herstellbar
und korrosionsfest. Abstandsstücke zwischen Boden- und
Deckfläche sichern eine genügende mechanische Festigkeit.
Dadurch, daß nur ein Zuführ- und nur ein Abführstutzen vorgesehen sind, die aus dem Profil der Hohlplatte herausragen,
wird der Einbau erheblich erleichtert. Zur Auslegung einer
Fläche mit den erfindungsgemäßen hohlplattenförmigen Bauelementen wird zunächst eine Reihe dieser Bauelemente gebildet, derart, daß die Seite, die die Stutzen aufweist,
freibleibt. Dann werden die nebeneinander liegenden Stutzen
benachbarter Platten U-förmig z.B. durch entsprechend geformte Muffen miteinander verbunden. Anschließend wird die
nächste Reihe eingelegt, wobei die miteinander bereits verbundenen Stutzen der zuerst erwähnten Reihe in den entsprechenden Aussparungen der neuen Reihe Platz finden. Dadurch,
daß die Aussparungen der Hohlplatten von deren Deckenwandung überdeckt sind, ist die Oberfläche der mit den Hohlplatten ausgelegten Boden- oder Wandfläche vollständig geschlossen.

Der Muffenanschluß kann bei Verwendung der erfindungsgemäßen
Hohlplatten bequem erfolgen, weil die miteinander zu verbindenden Stutzen der Hohlplattenreihe frei zugänglich
sind. In der o.a. bekannten Anordnung dagegen liegen die
miteinander zu verbindenden Stutzen in Aussparungen der
Hohlplatten. Insbesondere gestaltete sich die Verbindung derjenigen Stutzen schwierig, die in dem durch vier zusammenstoßende Ecken gebildeten Aussparungsraum nach dem Einlegen
einer neuen Plattenreihe erfolgen muß.

Es sind bereits hohle Betonheizkörper bekannt, die aus zwei
Halbschalen zusammengesetzt sind (DE-PS 399 070), jedoch sind
diese nicht als rechteckig begrenzte Platten ausgebildet, so
daß sie sich nicht lückenlos zusammensetzen lassen. Auch
fehlen festigkeitserhöhende Abstandsstücke. Andererseits
waren bekannte zusammensetzbare keramische rechteckförmig
begrenzte Raumheizkörper nicht hohl im Sinne der vorliegenden
Erfindung ausgebildet, sondern mit engen rohrförmigen Kanälen für das Heizwasser und weiten rohrförmigen Kanälen
für die zu erwärmende Luft versehen (DE-AS 1 191 535).

Ein Ausführungsbeispiel der Erfindung wird im folgenden an
Hand der Fig. 1 und 2 beschrieben.

Fig. 1 stellt eine Draufsicht auf die Bodenwandung der
Hohlplatte und
Fig. 2 einen Schnitt längs der Linie A-A in Fig. 1 dar.

Die rechteckförmig begrenzte Hohlplatte weist eine Bodenwandung 1, eine Deckenwandung 2 und die vier Seitenwandungen
3 - 6 auf. Zwischen Bodenwandung 1 und Deckenwandung 2 sind
Abstandsstücke vorgesehen (vgl. in Fig. 1 z.B. 7 und 10),
die der Hohlplatte eine so große Festigkeit geben, daß sie
betretbar ist und die so geformt und verteilt werden, daß
eine gute Flüssigkeitsdurchströmung vom Zuführ- zum Abführstutzen erfolgt. Die Herstellung der Hohlplatte mit solchen Abstandsstücken macht keine Schwierigkeiten: In die Herstellungsform kann nach dem Einfüllen des Werkstoffs für die Bodenplatten eine Formplatte aus leicht schmelzbarem Stoff, wie z.B. Paraphin oder Wachs, eingelegt werden, die zur Bildung der Abstandsstücke mit entsprechenden Aussparungen versehen ist. Diese Formplatte kann nach Fertigstellung der Hohlplatte z.B. bereits durch die entstehende Abbindewärme leicht herausgeschmolzen werden.

In die Seitenwandung 3 sind der Zuführstutzen 8 und der Abführstutzen 9 eingesetzt und zwar nahe den betreffenden Ecken der Hohlplatte.

Damit das Wärmetransportmedium den Hohlraum der Platte möglichst vollständig und gleichmäßig durchflutet, ist in dem Hohlraum der Platte das rippenartige Abstandsstück 10 angeordnet. Die Durchflutung kann außerdem durch die Anzahl, die Lage und die Form der Abstandsstücke 7 gesteuert werden.

Die Hohlplatte weist gegenüber der Seitenwandung 3, also auf der Seite der Seitenwandung 5, zwei Aussparungen 11 und 12 auf, die in der Ausdehnung der Plattendicke nach außen offen und so geformt sind, daß sie die Zuführ- und Abführstutzen der vorher verlegten Hohlplattenreihe aufnehmen können und zwar einschließlich der U-förmigen Verbindungsstücke zwischen nebeneinander liegenden Stutzen benachbarter Platten. Diese Aussparungen lassen jedoch die entsprechenden Ecken der Deckenwandung 2 unberührt, so daß die Aussparungen durch das Einlegen jeweils der nächsten Hohlplattenreihe in Bezug auf die vorher eingelegte Reihe überdeckt sind.

Wie sich den Fig. 1 und 2 entnehmen läßt, sind die Seitenwandungen 3 bis 6 gegen den Rand der Bodenwandung 1 und mehr noch gegen den Rand der - die Bodenwandung überragenden - Deckenwandung 2 zurückgesetzt, so daß rings um die Hohlplatte herum eine nutartige Vertiefung der Seitenflächen entsteht und außerdem nach dem Einlegen zwischen benachbarten Bodenwandungen (1) ein Zwischenraum bleibt, während die Deckenwandungen 2 sich unmittelbar berühren. Auf diese Weise kann ein z.B. aus einem mit einem Kopf versehenen Schaft bestehendes Befestigungsmittel verwendet werden, das - bezüglich des Schaftes - Platz zwischen benachbarten Bodenwandungen (1) findet und bezüglich des Kopfes von den erwähnten Nuten aufgenommen wird.

Die Außenfläche der Deckenwandung 2 kann in an sich bekannter Weise eine veredelte Oberflächenstruktur erhalten, gleichgültig ob die erfindungsgemäße Hohlplatte zur Boden- oder zur Wandbelegung verwendet wird.

Die Fig. 1 und 2 sind nicht maßstäblich ausgeführt. Erprobungen führten bei Belegungsfläche einer Platte von 50 x 70 cm$^2$ zu einer Plattendicke von etwa 4 cm.

- 1 -

<u>P a t e n t a n s p r ü c h e</u>

1. Als rechteckförmig begrenzte Hohlplatte ausgebildetes
Wärmeaustauschelement, <u>gekennzeichnet durch</u> folgende
Merkmale:

1. die Hohlplatte besteht aus Beton, aus durch Kunstharz
gebundenem Sand oder einem anderen gleichartigen Werkstoff,

2. in eine Seitenwandung (3) - jeweils nahe der Hohlplattenecke - ist, vorzugsweise senkrecht zur Seitenwandung, ein Zuführ- und ein Abführstutzen (8,9) eingesetzt, die aus dem Profil der Hohlplatte herausragen.

3. die der Seitenwandung (3) zu 2. gegenüberliegende
Seitenwandung (5) weist an ihren beiden Ecken Aussparungen (11,12) auf, deren jede beim reihenweisen
Zusammenlegen der Hohlplatten zusammen mit der daneben
liegenden Aussparung der Nachbarplatte Platz zur Aufnahme benachbarter Stutzen einschließlich einer U-
förmigen Verbindung zwischen ihnen bietet,

4.     die Aussparungen (11,12) sind von der Deckenwandung
(2) der Hohlplatte überdeckt.

2. Hohlplatte nach Anspruch 1, <u>dadurch gekennzeichnet</u>, daß
zwischen Boden- und Deckenwandung (1,2) Abstandsstücke
(7,10) angeordnet sind.

3. Hohlplatte nach Anspruch 2, <u>dadurch gekennzeichnet</u>, daß
ein Abstandsstück (10) rippenartig zur Leitung der
Flüssigkeitsdurchströmung der Hohlplatte ausgebildet ist.

- 2 -

4. Hohlplatte nach Anspruch 1, dadurch gekennzeichnet, daß die Seitenwandungen (3 bis 6) gegen den Rand der Bodenwandung (1) und mehr noch gegen den Rand der - die Bodenwandung überragenden - Deckenwandung (2) zurücktreten, um - bei unmittelbarem Aneinanderstoßen benachbarter Deckenwandungen - Befestigungsmitteln Platz zu bieten.

5. Hohlplatte nach Anspruch 1, dadurch gekennzeichnet, daß die Deckenwandung (2) auf der Außenseite eine veredelte Oberflächenstruktur aufweist.

׀׀׀

Fig. 2

Fig.1